(19) **Europäisches Patentamt / European Patent Office / Office européen des brevets**

(11) **EP 3 772 216 B1**

(12) **EUROPEAN PATENT SPECIFICATION**

(45) Date of publication and mention
of the grant of the patent:
**18.01.2023 Bulletin 2023/03**

(51) International Patent Classification (IPC):
**H04N 1/00** *(2006.01)*        **H04N 1/23** *(2006.01)*
**B41J 2/46** *(2006.01)*

(21) Application number: **20188336.0**

(52) Cooperative Patent Classification (CPC):
**H04N 1/00885; H04N 1/23**

(22) Date of filing: **29.07.2020**

(54) **OUTPUT CONTROL DEVICE, LASER OUTPUT DEVICE, IMAGE RECORDING DEVICE, OUTPUT CONTROL METHOD, AND OUTPUT CONTROL PROGRAM**

AUSGABESTEUERUNGSVORRICHTUNG, LASERAUSGABEVORRICHTUNG, BILDAUFNAHMEVORRICHTUNG, AUSGABESTEUERUNGSVERFAHREN UND AUSGABESTEUERUNGSPROGRAMM

DISPOSITIF DE COMMANDE DE SORTIE, DISPOSITIF DE SORTIE LASER, DISPOSITIF D'ENREGISTREMENT D'IMAGES, PROCÉDÉ DE COMMANDE DE SORTIE ET PROGRAMME DE COMMANDE DE SORTIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **30.07.2019   JP 2019140259**
         **15.07.2020   JP 2020121547**

(43) Date of publication of application:
**03.02.2021 Bulletin 2021/05**

(73) Proprietor: **Ricoh Company, Ltd.**
**Tokyo 143-8555 (JP)**

(72) Inventors:
  • **TACHIBANA, Hiroto**
    **Tokyo, 143-8555 (JP)**

  • **UEHIRA, Masataka**
    **Tokyo, 143-8555 (JP)**
  • **NIHEI, Yasuhiro**
    **Tokyo, 143-8555 (JP)**
  • **HIRAYAMA, Rie**
    **Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(56) References cited:
**EP-A1- 3 210 791**        **WO-A1-03/084013**
**US-A1- 2010 260 216**    **US-A1- 2015 229 095**

**Description**

BACKGROUND OF THE INVENTION

1. Field of the Invention

The present invention relates to an output control device, a laser output device, an image recording device, an output control method, and an output control program.

2. Description of the Related Art

Related art laser devices have been developed to provide an object with state changes such as coloring, melting, and surface modification by thermal energy. Such laser devices typically apply laser light emitted by laser emitting elements (laser diodes, VCSELs, or the like) to an object through an optical system.

The above laser devices employ a switching-type pulse current drive control method to improve efficiency of drive circuits of laser emitting elements. To drive and control a diode load such as a laser diode, the light output is typically controlled by current drive.

In order to improve the efficiency of current drive, Japanese Patent. No. 6077263 discloses a switching-type pulse current drive control method. The disclosed switching-type pulse current drive control method includes chopping an input voltage by a switching element, subsequently feeding back a current flowing through a smoothing element such as a coil, and switching a direction of electric current application according to laser application timing.

This switching-type pulse current drive control method appears to be problematic because this method may exhibit a large variation in the output due to ripple current.

EP 3 210 791 A1 describes a recording method including: emitting laser light from an optical fiber array to record an image formed of writing units with moving a recording target and the optical fiber array relatively using a recording device including a plurality of laser light-emitting elements and an emitting unit including the optical fiber array, in which a plurality of optical fibers configured to guide laser light emitted from the laser light-emitting elements are aligned, wherein a maximum length of the writing unit along a sub-scanning direction is controlled with set values of: a duty ratio and a cycle of a pulse signal input to the emitting unit; recording energy applied to the recording target; and a spot diameter of the laser light, to record with overlapping an edge of the writing unit with an edge of the adjacent writing unit in the sub-scanning direction.

US 2015/229095 A1 describes a laser device which includes an optical fiber laser unit including an amplification optical fiber, a plurality of pumping light sources outputting pumping lights for optically pumping the amplification optical fiber, and a controller controlling the pumping light sources. When an instruction value for supplying a predetermined driving electric current to each of the pumping light sources is input to the controller, the controller conducts a control of supplying a compensated electric current value as a driving electric current obtained by multiplying an initial electric current value corresponding to the instruction value by a compensation coefficient and supplying the compensated electric current value to each of the pumping light sources. The compensation coefficient is set to restrain a decrease in a power with time of a laser light output from the optical fiber laser unit.

US 2010/260216 A1 describes a pulse generation method and laser light source apparatus which enables simultaneous setting or automatic setting of a pulse peak and a pulse width of a light pulse. In a configuration comprising a light emitting element outputting laser light, a driving current supply section supplying a driving current to the light emitting element, a modulator applying a modulation voltage for pulse modulation of the laser light to the light emitting element, and a modulation control section controlling a modulation pattern as a pattern of pulse modulation of the modulation voltage for the modulator, the modulation control section sets a modulation voltage value in the modulation pattern based on information on a driving current value, and sends information on the modulation pattern to the modulator so that the modulation voltage reaches the set value.

WO 03/084013 A1 describes a solid laser apparatus for outputting a solid laser beam from a solid laser unit by excitation by a laser diode. There is provided a power supply controller for supplying excitation current to the laser diode so as to compensate temporal increase/decrease of the solid laser beam output. By using this power supply controller, it is possible to obtain a desired laser output value in the solid laser beam output from immediately after the output start of the solid laser beam.

SUMMARY OF THE INVENTION

The invention is defined by the subject-matter of the independent claims. The dependent claims are directed to advantageous embodiments.

ADVANTAGES OF THE INVENTION

Advantageously, a variation in the output between elements in a laser output device that includes at least one laser emitting element can be reduced.

BRIEF DESCRIPTION OF DRAWINGS

FIG. 1 is a schematic perspective diagram illustrating an image recording system acting as an image recording device according to an embodiment;

FIG. 2 is a schematic perspective diagram illustrating a configuration of a recording device according to an embodiment;

FIG. 3 is a block diagram partially illustrating electric circuits of the image recording system;

FIG. 4 is a block diagram illustrating an electric circuit of the recording device illustrated in FIG. 3;

FIG. 5 is a block diagram illustrating a driver of the electric circuit illustrated in FIG. 4;

FIG. 6A includes graphs each illustrating a correction method of output energy of a laser emitting element performed by a controller;

FIG. 6B includes graphs each illustrating a correction method of output energy of a laser emitting element performed by the controller;

FIG. 6C includes graphs each illustrating a correction method of output energy of a laser emitting element performed by the controller;

FIG. 7A includes graphs each illustrating a method of acquiring a correction energy characteristic for a different light source;

FIG. 7B includes graphs each illustrating a method of acquiring the correction energy characteristic for a different light source;

FIG. 8 is a diagram illustrating examples of characteristics of a correction function where a current value is variable;

FIG. 9 is a flowchart illustrating a calculation process of the correction function;

FIG. 10 is a flowchart illustrating an operation of a driver of the electric circuit illustrated in FIG. 5; and

FIG. 11 is a diagram illustrating a hardware configuration of the controller.

DESCRIPTION OF THE EMBODIMENTS

Hereinafter, embodiments will be described with reference to the accompanying drawings. In order to facilitate understanding of the description, the same elements in different drawings are designated by the same reference numerals wherever possible, and a duplicated description is omitted.

The following describes an image recording device configured to record an image on a thermosensitive recording label affixed to a shipping container. Note that the shipping container is given as an example of a structure with a thermosensitive recording medium, which acts as a recording target.

According to the present embodiment, "recording" means printing a logo, a product name, a serial number, a model number, or the like, by irradiating a recording target with light such as a laser to perform surface melting, surface burning, surface peeling, surface oxidizing, surface shaving, or surface decolorating. The "recording" may also mean "contactless marking", "laser marking", "laser typing", or "laser printing".

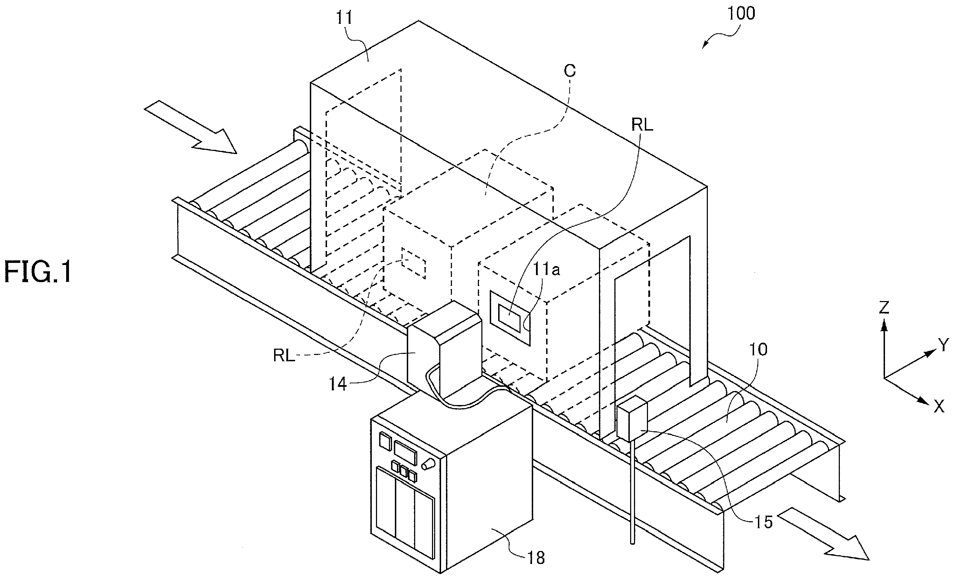

FIG. 1 is a schematic perspective diagram illustrating an image recording system 100 acting as an image recording device according to an embodiment. In the following description, an X-axis direction indicates a transport direction of a transport container C, a Z-axis direction indicates a vertical direction, a Y-axis direction indicates a direction orthogonal to both the transfer direction and the vertical direction. As described in more details below, the image recording system 100 is configured to record an image by irradiating a thermosensitive recording label RL affixed to a container C with laser light. Note that the container C, to which thermosensitive recording label RL is affixed, indicates a recording target. As illustrated in FIG. 1, the image recording system 100 includes a conveyor device 10 serving as a transport unit configured to transport a recording target, a recording device 14, a system control device 18, a reading device 15, a shielding cover 11, and the like.

The recording device 14 is configured to irradiate a thermosensitive recording label RL with laser light so as to record an image as a visible image on a recording target. The recording device 14 is disposed at a -Y side of the conveyor device 10, i.e., at the -Y side of a conveyor path.

The shield cover 11 is configured to prevent laser light emitted from the recording device 14 from diffusing by blocking the laser light. The shield cover 11 has a black alumite coating on its surface. The shield cover 11 is provided with an opening 11a on a side facing the recording device 14 so as to pass laser light through the opening 11a. According to the present embodiment, the conveyor device 10 used herein is a roller conveyor; however, the conveyor device 10 may be a belt conveyor.

The system control device 18 is connected to a conveyor device 10, the recording device 14, the reading device 15, and the like, so as to control the entire image recording system 100. Further, as will be described later, the reading device 15 is configured to read a code image, such as a bar code or a QR code (a registered trademark), recorded on a recording target. The system control device 18 checks whether an image is correctly recorded based on information read by the reading device 15.

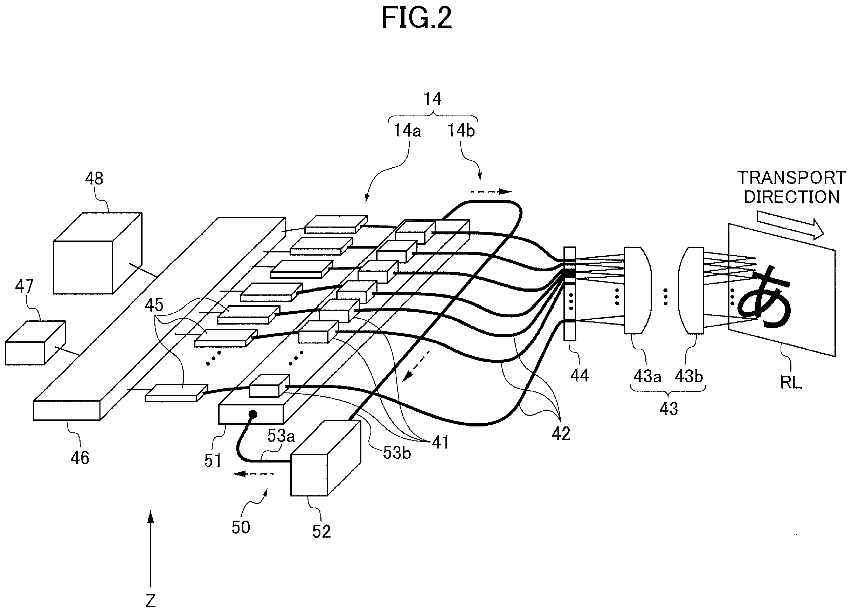

FIG. 2 is a schematic perspective diagram illustrating a configuration of the recording device 14 according to an embodiment. According to the present embodiment, the recording device 14 is a fiber array recording device. The fiber array recording device is configured to record an image by using a fiber array. The fiber array is composed of a plurality of optical fiber laser emitting portions, where the plurality of optical fiber laser emitting portions are disposed in a main scanning direction (Z-axis direction) perpendicular to a sub-scanning direction (X-axis direction) of the container C, which acts as a recording target. In this configuration, the sub-scanning direction (X-axis direction) is a moving direction of the container C. Such a fiber array recording device applies laser light emitted from laser emitting elements through the fiber array onto a recording target, thereby recording an image composed of rendered units. Specifically, the recording device 14 includes a laser array unit 14a, a fiber array unit 14b, and an optical unit 43. The laser array unit 14a includes a plurality of laser emitting elements 41 (output elements) disposed in an array, a cooler unit 50 configured to cool the laser emitting elements 41, a plurality of drivers 45 disposed corresponding to the laser emitting elements 41 for driving the corresponding laser emitting elements 41, and a controller 46 configured to control the plurality of drivers 45. A power supply 48 and an image information output unit 47 such as a personal computer are connected to the controller 46. The power supply 48 is configured to supply power to the laser emitting elements 41, and the image information output unit 47 is configured to output image information.

Laser types for the laser emitting elements 41 may be optionally selected according to purpose of applications; examples include a semiconductor laser, a solid-state laser, a dye laser, or the like. Among these, a semiconductor laser may be preferably used for the laser emitting elements 41, in view of wider wavelength selectivity, downsizing of devices due to its small size, and low cost.

The wavelength of laser light emitted by a laser emitting element 41 is not particularly limited, and may be appropriately selected according to applications. However, the wavelength of laser light emitted by the laser emitting element 41 may preferably be from 700 nm to 2000 nm and more preferably from 780 nm to 1600 nm.

According to the laser emitting elements 41 acting as emitting units, not all the energy applied to the laser emitting elements 41 is converted into laser light. The energy that is not converted into laser light is converted to heat such that the laser emitting elements 41 generate heat. Thus, the laser emitting elements 41 are required to be cooled down by the cooler unit 50, which acts as a cooler unit. According to the present embodiment, the recording device 14 includes the fiber array unit 14b in order to dispose the laser emitting elements 41 separately from each other. This arrangement reduces thermal effects from the neighboring laser emitting elements 41, thereby efficiently cooling the laser emitting elements 41. Thus, it is possible to prevent a temperature rise and variation in the laser emitting elements 41, and also possible to reduce the laser light output variations, thereby preventing density variation and blank printing.

Note that the output of laser light indicates the average output measured with a power meter. There are two methods for controlling the output of laser light: the first one is a method for controlling the peak power and the second one is a method for controlling the pulsed emission ratio (Duty: laser emission time/period time).

The cooler unit 50 is a liquid cooling system that cools the laser emitting elements 41 by circulating cooling liquid. The cooler unit 50 includes a heat receiver 51 configured to receive heat from each of the laser emitting elements 41, and a heat sink 52 configured to transfer heat from the cooling liquid. The heat receiver 51 and the heat sink 52 are connected via cooling pipes 53a and 53b. The heat receiver 51 is provided with the cooling pipes for flowing the cooling liquid. The cooling pipes are made of an excellent heat conducting material inside a case, which is also made of an excellent heat conducting material. A plurality of laser emitting elements 41 are disposed in an array on the heat receiver 51.

The heat sink 52 includes a radiator and a pump for circulating a cooling liquid. The cooling liquid fed by the pump of the heat sink 52 flows through the cooling pipe 53a into the heat receiver 51. While the cooling liquid moves through the cooling pipe 53a inside the heat receiver 51, the cooling liquid removes heat from the laser emitting elements 41 disposed on the heat receiver 51, thereby cooling the laser emitting elements 41. The cooling liquid, which has flown from the heat receiver 51 and removed the heat of the laser emitting elements 41, moves inside the cooling pipe 53b, and flows into the radiator of the heat sink 52, and is then cooled by the radiator. The cooling liquid cooled by the radiator is fed back to the heat receiver 51 by the pump.

The fiber array unit 14b includes a plurality of optical fibers 42 disposed corresponding to the laser emitting elements 41, and an array head 44 configured to hold laser output portions of the optical fibers 42 in an array along a vertical direction (a Z-axis direction). The laser input portions of the respective optical fibers 42 are affixed to laser output surfaces of the laser emitting elements 41.

The image information output unit 47, such as a personal computer (PC), inputs image data to a controller 46. The controller 46 generates a drive signal for driving each driver 45 based on the input image data. The controller 46 transmits the generated drive signal to the corresponding driver 45. Specifically, the controller 46 includes a clock generator. The controller 46 transmits a drive signal to the corresponding driver 45 when the number of clocks generated by the clock generator achieves a predetermined number of clocks.

Upon receiving a drive signal, the drivers 45 drive respective laser emitting elements 41. The laser emitting elements 41 emit laser light according to driving states of the drivers 45. Laser light emitted from laser emitting elements 41 enters the respective optical fibers 42, and is then output (emitted) from the laser output portions of the optical fibers 42. The laser light emitted from the laser output portions of the optical fibers 42 passes through a collimating lens 43a and a collecting lens 43b of the optical unit 43, and is then applied to a surface of thermosensitive recording label RL of the container C, which acts a recording target. An image is recorded on the surface of thermosensitive recording label RL by being heated by the laser light applied on the surface of thermosensitive recording label RL.

In a case where a recording device configured to record an image on a recording target by utilizing a galvanomirror to deflect a laser beam is used, an image such as a character is recorded by a single stroke of a laser beam, which is applied by rotation of the galvanomirror. Accordingly, in order to record a certain amount of information on a recording target, the recording cannot be completed in time, unless transportation of the recording target is temporarily stopped. By contrast, the recording device 14 according to the present embodiment includes a laser array having a plurality of laser emitting elements 41 disposed in an array. In this configuration, an image can be recorded on a recording target by simply controlling ON/OFF of the laser emitting elements 41 corresponding to respective pixels. Accordingly, when the recording device 14 according to the present embodiment is used, an image having a large amount of information can be recorded on the recording target without temporarily stopping transportation of the container C. Thus, even when the recording device 14 according to the present embodiment needs to record an image having a large amount of information on a recording target, the image can be recorded without degrading productivity.

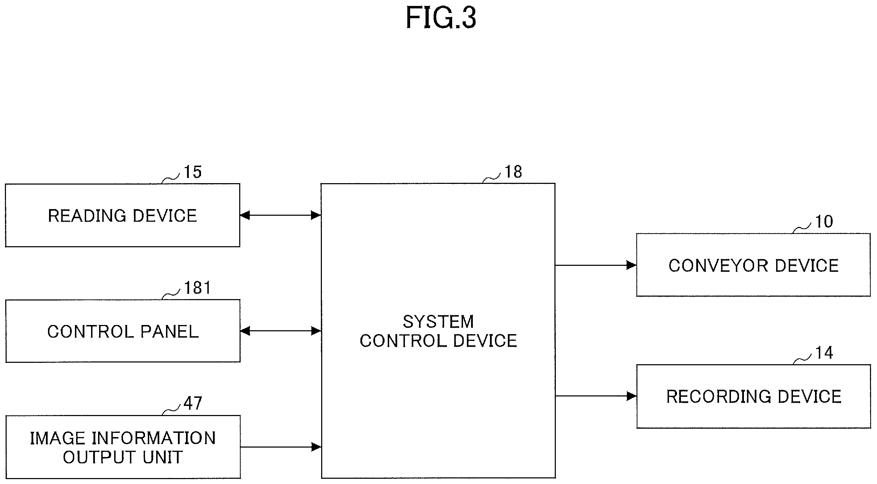

FIG. 3 is a block diagram partially illustrating electric circuits of the image recording system 100 according to an embodiment. The system control device 18 illustrated in FIG. 3 includes a CPU, a RAM, a ROM, a non-volatile memory, and the like (not illustrated). The system control device 18 is configured to control driving of various devices and perform various operations of the image recording system 100. The system control device 18 is connected to a conveyor device 10, the recording device 14, a reading device 15, a control panel 181, an image information output unit 47, or the like.

The control panel 181 includes a touch panel display, and a variety of keys for displaying images or receiving various information input upon an operator's operating keys.

As illustrated in FIG. 3, the system control device 18 functions as an image recorder in response to the CPU being operated according to a program stored in the ROM or the like. The system control device 18 is configured to control the recording device 14 to apply a laser to a recording target, which moves relative to the recording device 14 in a direction differing from a predetermined direction. The recording target is heated by laser applied to form image dots, thereby recording an image.

Next, an example of an operation of the image recording system 100 will be described with reference to FIG. 1. First, an operator places the container C containing packages on the conveyor device 10. The operator places the container C to direct a lateral side of a body of the container C at a -Y side that faces the recording device 14. Specifically, the operator places the container C on the conveyor device 10 to direct the thermosensitive recording label RL affixed to the container C at the -Y side so that the thermosensitive recording label RL faces the recording device 14.

Upon the operator's operating the control panel 181 to start the system control device 18, a transport start signal is transmitted from the control panel 181 to the system control device 18. Upon receiving the transport start signal, the system control device 18 starts driving the conveyor device 10. The conveyor device 10 accordingly conveys the container C toward the recording device 14. A transport speed of container C is, for example, 2 m/sec.

A sensor is disposed at an upstream side of a transport direction of the container C relative to the recording device 14, such that the sensor detects the container C transported on the conveyor device 10. Upon the sensor detecting the container C, the sensor transmits a detection signal to the system control device 18. The system control device 18 has a timer. The system control device 18 starts measuring a time using the timer upon receiving the detection signal from the sensor. The system control device 18 recognizes a timing at which the container C reaches the recording device 14, based on a time elapsed from a timing at which the detection signal is received.

When the elapsed time from the timing of receiving the detection signal becomes T1, which indicates a timing at which the container C reaches the recording device 14, the system control device 18 outputs a recording start signal to the recording device 14, such that the recording device 14 records an image on the thermosensitive recording label RL affixed to the container C while the container C passes through the recording device 14.

The recording device 14 emits laser light of a predetermined power toward the thermosensitive recording label RL affixed to the container C, based on the image information received from the image information output unit 47, while the container C moves relative to the recording device 14. This allows an image to be recorded on the thermosensitive recording label RL in a non-contact manner.

An image recorded on the thermosensitive recording label RL is image information transmitted from the image information output unit 47. Examples of such an image may include a character image such as an image representing the contents of packages stored in container C and information about the destination of the container C, and a code image such as a barcode or a two-dimensional code that codes information such as the contents of packages contained in the container C and the information about the destination of the container C.

The container C, to which an image has been recorded while the container C passes through the recording device 14, subsequently passes through the reading device 15. As the container C passes through the recording device 14, the reading device 15 reads the code image, such as a bar code or a two-dimensional code, recorded on the thermosensitive recording label RL, and also acquires information such as the contents of the packages stored in the container C, the transport destination information, and the like. The system control device 18 checks whether the image is correctly recorded by comparing the information acquired from the code image with the image information transmitted from the image information output unit 47. When the image is correctly recorded, the system control device 18 allows the conveyor device 10 to transport the container C to the next step (e.g., a transport preparation step).

However, when the image is not recorded correctly, the system control device 18 temporarily stops the conveyor device 10 to indicate on the control panel 181 that the image is not recorded correctly. Alternatively, when the image is not recorded correctly, the system control device 18 may transport the container C to a predetermined destination.

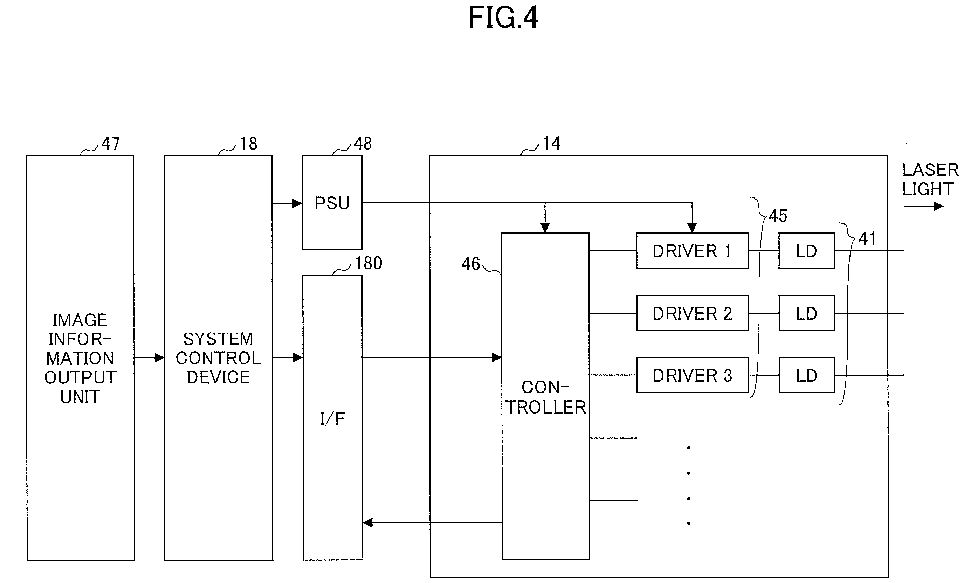

FIG. 4 is a block diagram illustrating an electric circuit of the recording device 14 illustrated in FIG. 3. An I/F unit 180 is disposed between the system control device 18 and the controller 46.

The image information output unit 47 transmits to the system control device 18 information associated with optical energy required for outputting a desired dot density. The system control device 18 transmits, as information on the required optical energy, a control signal indicating a timing, a pulse width, and peak power to the controller 46 through the I/F unit 180, and receives a status signal from the controller 46 through the I/F unit 180.

The drivers 45 of the recording device 14 may typically be a high-efficiency switching type or a low-efficiency linear type; however, the type of the drivers 45 is not particularly specified in the present embodiment insofar as the drivers 45 can output pulses.

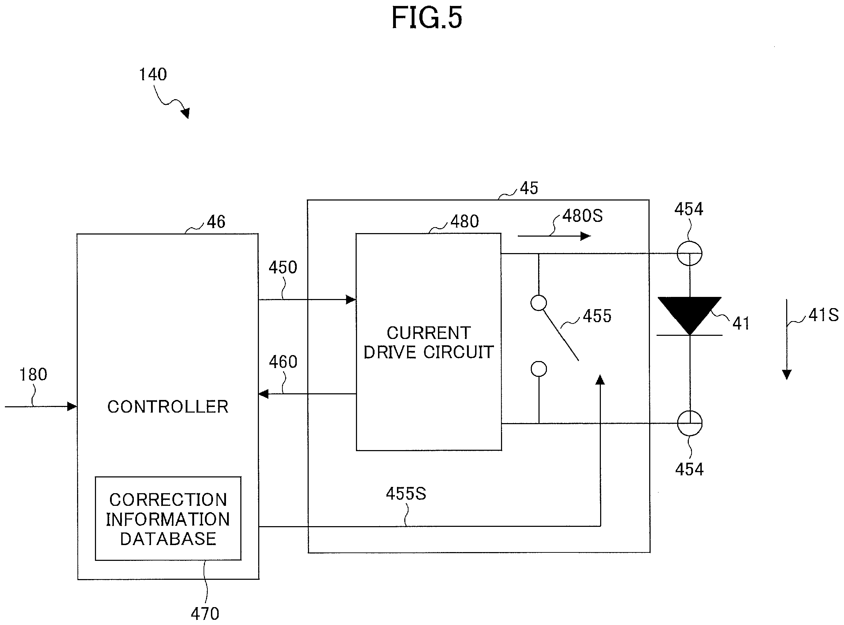

FIG. 5 is a block diagram illustrating an electric circuit of a driver 45 illustrated in FIG. 4.

The driver 45 includes a current drive circuit 480 configured to supply an output current 480S to a target to be driven (a drive target) connected to the output units 454 upon receiving a control signal 450 from the controller 46.

According to the present embodiment, a laser emitting element 41 is connected to the output units 454; however, any other form of an LED may be connected to the output units 454.

In FIG. 5, in order to implement high-speed pulse modulation, a light emitting controller 455 (switching unit) is connected in parallel to the output units 454 such that the light emitting controller 455 is configured to control emission of the laser emitting element 41 by switching a current path of an electric current that flows through the laser emitting element 41. The light emitting controller 455 is composed of a switching element, such as a MOSFET.

The current modulation rate of the drive current to be driven by the light emitting controller 455 is high because the current modulation rate depends on a switching time of the switching element of the light emitting controller 455 (tens of nanoseconds in the case of a MOSFET).

The current drive circuit 480 has a function of monitoring an electric current that flows into the drive target connected to the light emitting controller 455 and the output units 454. The current drive circuit 480 may transmit a feedback signal 460 to the controller 46.

The controller 46 is configured to transmit, to the light emitting controller 455, a PWM control signal 455S as a switching signal (light emitting information) for switching the light emitting controller 455 on and off. When the pulse frequency is 40 kHz (one period=25 $\mu$s), and the recording device 14 has 256 gradations, one pixel corresponds to a pulse width of approximately 0.1 $\mu$s ($\simeq$100 ns). When a pulse signal with a duty cycle 50% (128 gradations) is assumed to be output, the pulse width is approximately 12.8 $\mu$s.

The controller 46 includes a correction information database 470 configured to store correction information (correction functions $\beta$ to be described later) corresponding to modulation characteristics of a plurality of laser emitting elements 41. Prior to use of the output device according to the present embodiment, the correction information database 470 is preliminarily created and maintained by the controller 46, based on input/output information acquired from the laser emitting elements 41.

According to the present embodiment, a PWM control signal 455S that has been referred to the correction information database 470 is transmitted to each of the light emitting controllers 455 for controlling the plurality of laser emitting elements 41 so as to reduce variations in pulse energies generated in a main scanning direction (an arrangement direction of the laser emitting elements) perpendicular to a moving direction of the recording target.

The drivers 45 and the controller 46 described above form an output control device 140. The output control device 140 is configured to control an output current 480S, which is an electric current supplied to the output units 454. Further, the laser emitting elements 41 are connected to the output control device 140 to thereby form a laser output device.

As described above, according to the present embodiment, the controller 46 is configured to individually correct respective PWM control signals addressed to the plurality of laser emitting elements 41 according to characteristics of the individual laser emitting elements 41, thereby making the outputs of the plurality of laser emitting elements 41 uniform. This correction process will be described below.

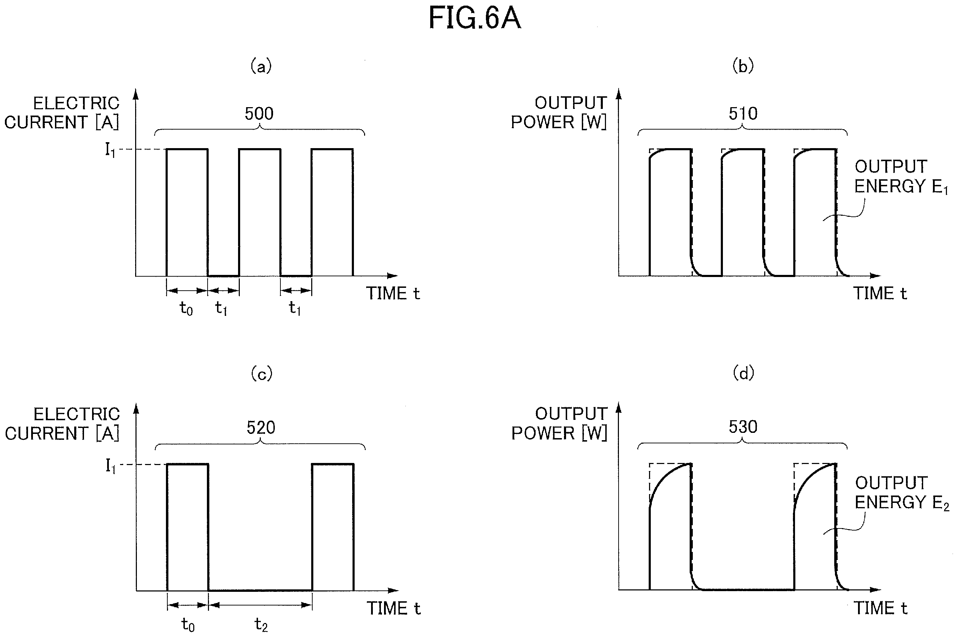

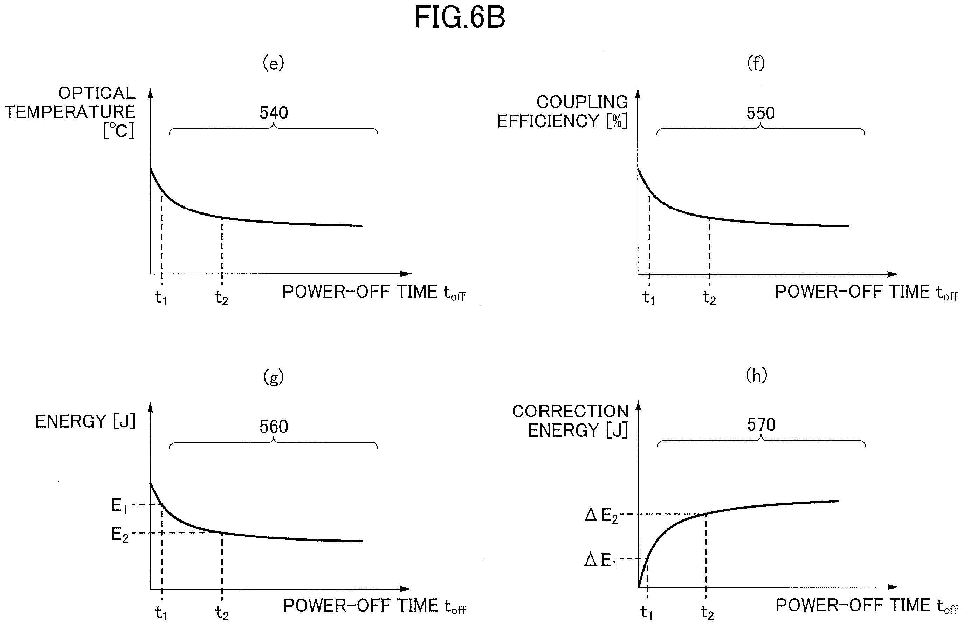

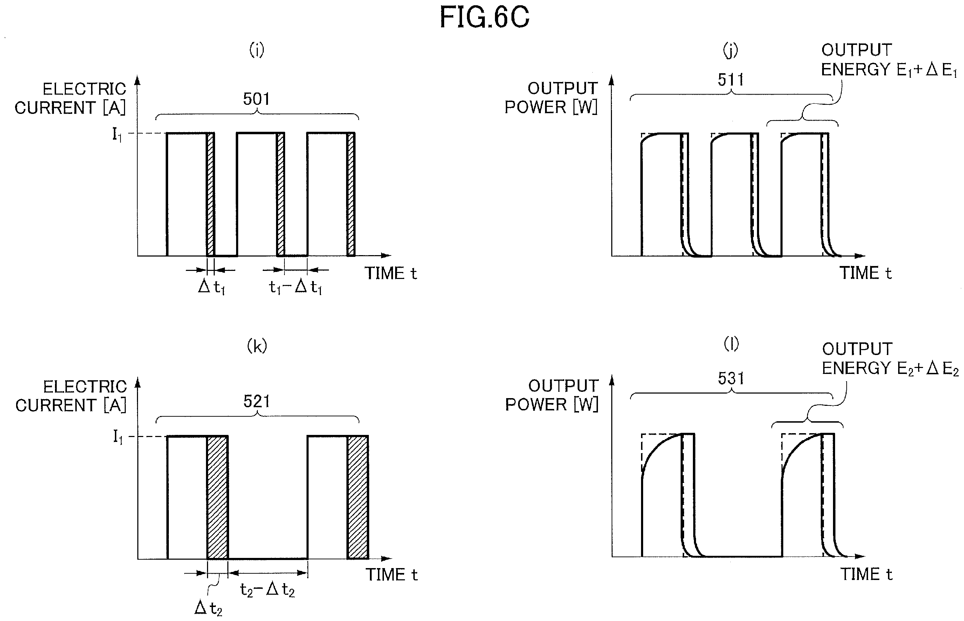

FIG. 6A, FIG. 6B, and FIG. 6C each illustrate output energy correction method of a laser emitting element 41, which is performed by the controller 46.

In FIG. 6A, (a) illustrates an example of an electric current waveform (current waveform 500) of an electric current flowing through a laser emitting element 41, and (b) illustrates an output power waveform (output power waveform 510) illustrating output power of the laser emitting element 41 according to the current waveform 500. In the output power waveform 510 in (b), a target output is indicated by a broken line and an actual output is indicated by a solid line. Further, in FIG. 6A, (c) illustrates a current waveform 520 having a relatively long power-off time compared to a power-off time of the current waveform 500, and (d) illustrates an output power waveform 530 of output power of the laser emitting element 41 according to the current waveform 520. In (b) and (d), a target output is indicated by a broken line and an actual output is indicated by a solid line.

When a PWM control signal 455S is transmitted to the light emitting controller 455 in FIG. 5, a time-dependent change in an electric current 41S flowing through the laser emitting element 41 appears to form the current waveform 500 in (a) of FIG. 6A. The current waveform 500 has a power-off time $t_1$ during which no electric current flows between the formed pulse waveforms with a time width to. The time width to indicates a power-on time to during which electric current flows.

In this case, a time-dependent change in an optical power output from a laser emitting element 41 forms ideally close to a rectangular waveform, such as an output power waveform 510 as illustrated in (b) of FIG. 6A. The output energy per one output power waveform 510 is indicated by $E_1$.

When it is assumed that the power-on time to remains unchanged and a power-off time is $t_2$ that is longer than $t_1$, a current waveform 520 illustrated in (c) of FIG. 6A ($t_1 < t_2$) will be obtained.

In this case, a time-dependent change in the output power of the laser emitting element 41 may be an output power waveform 530 illustrated in (d) of FIG. 6A, where the rising edge is rounded, and output energy is $E_2$ that is less than $E_1$.

The above-described case may be specifically observed with a laser emitting element having output power in a range of a few watts to several tens of watts. In many cases, an optical system is adjusted on the assumption that a laser emitting element emits laser light in a CW (continuous wave) condition. Thus, a laser emission pattern and the temperature of the optical system when the PWM is performed may change with time, and the coupling efficiency may easily decrease as the power-off time increases.

In FIG. 6B, (e) illustrates a characteristic 540 of an optical temperature with a power-off time $t_{off}$, and (f) illustrates a characteristic 550 of coupling efficiency with the power-off time toff estimated from the characteristic 540. Further, (g) illustrates a characteristic 560 of output energy with the power-off time toff estimated from the characteristic 550, and (h) illustrates a characteristic 570 of correction energy with the power-off time $t_{off}$ estimated from the characteristic 560. In (e) to (h) of FIG. 6B, the power-off times $t_1$ and $t_2$ ($t_1 < t_2$) illustrated in FIG. 6A are applied.

Using this light source, when the power-off time is increased while the power-on time to remains unchanged, the output energy per pulse waveform with the power-on time to may be affected by the coupling efficiency characteristic illustrated by a graph 550 in (f) of FIG. 6B. The output energy per pulse waveform with the power-on time to thus monotonically decreases as illustrated by a graph 560 in (g) of FIG. 6B ($t_1 < t_2$, $E_2 < E_1$). In other words, it is difficult to control this light source even if the power-on time is the same. This is because the energy per one output power waveform that is actually output varies with a length of the power-off time.

In order to prevent the above-described effect, the energy per one output power waveform with respect to a certain power-on time may be corrected so as to remain constant without being affected by the length of the power-off time. For example, when the coupling efficiency of a light source is known to have a characteristic of the graph 550 illustrated in (f) of FIG. 6B, a correction energy characteristic for the power-off time (see a graph 570 illustrated in (h) of FIG. 6B) may be set to compensate for the characteristic of the graph 550. In the graph 570 illustrated in (h) of FIG. 6B, $\Delta E_1$ is added to the output power waveform when the power-off time is $t_{off} = t_1$, and $\Delta E_2$ is added to the output power waveform when the power-off time is $t_{off} = t_2$ ($t_1 < t_2$, $\Delta E_1 < \Delta E_2$).

An example obtained by applying this correction method to the current waveform 500 is a current waveform 501 illustrated in (i) of FIG. 6C. It is assumed that when a voltage between terminals of the laser emitting element 41 is constant and represented by $V_1$, an additional current pulse width may be calculated by the following equation (1).

$$\Delta t_1 = \Delta E_1 / (I_1 \times V_1) ----- (1)$$

Thus, in an output power waveform 511, the output energy per one pulse waveform is represented by $E_1 + \Delta E_1$,

as illustrated in (j) of FIG. 6C.

Similarly, applying the correction method to the current waveform 520 results in a current waveform 521 illustrated in (k) of FIG. 6C. When a voltage between terminals of the laser emitting element 41 is a constant value $V_1$, an additional current pulse width may be calculated by the following equation (2).

$$\Delta t_2 = \Delta E_2 / (I_1 \times V_1) ----- (2)$$

Thus, in an output power waveform 531, the output energy per one pulse waveform is represented by $E_2 + \Delta E_2$, as illustrated in (1) of FIG. 6C.

When the correction energy characteristic (graph 570 in (h) of FIG. 6B) is based on the coupling efficiency characteristic (graph 550 in (f) of FIG. 6B) of a light source, the energy per one output power waveform in each of the output power waveforms 511 and 531 will be the same, which is represented by $E_1 + AE_1 = E_2 + \Delta E_2$.

Note that in the current waveforms 500, 520, 501, and 521, the current value is set to be a constant $I_1$. However, even when the current value is a given function $I_{(t)}$, $\Delta t_1$ satisfying the following equation (3) may be obtained by setting a constant value $V_1$ as a voltage between terminals of the laser emitting element 41, and setting to as a pulse width correction start time. The same applies to $\Delta E_2$.

$$\Delta E_1 = V_1 \times \int_{t_0}^{t_0 + \Delta t_1} I_{(t)} dt \qquad \cdots (3)$$

The method illustrated above is applied to one light source; however, a plurality of light sources is used as a fiber array in the actual device. When PWM is performed with the plurality of light sources, an optical system temperature (graph 540 in (e) of FIG. 6B) and a coupling efficiency characteristic (graph 550 in (f) of FIG. 6B) are not necessarily the same for all the light sources, and are likely to differ between the light sources.

In a case of recording an image using such a fiber array, the density of a recorded image typically becomes uneven because the energy per one output power waveform varies despite the fact that a current waveform with the same pulse width is input into the different light sources.

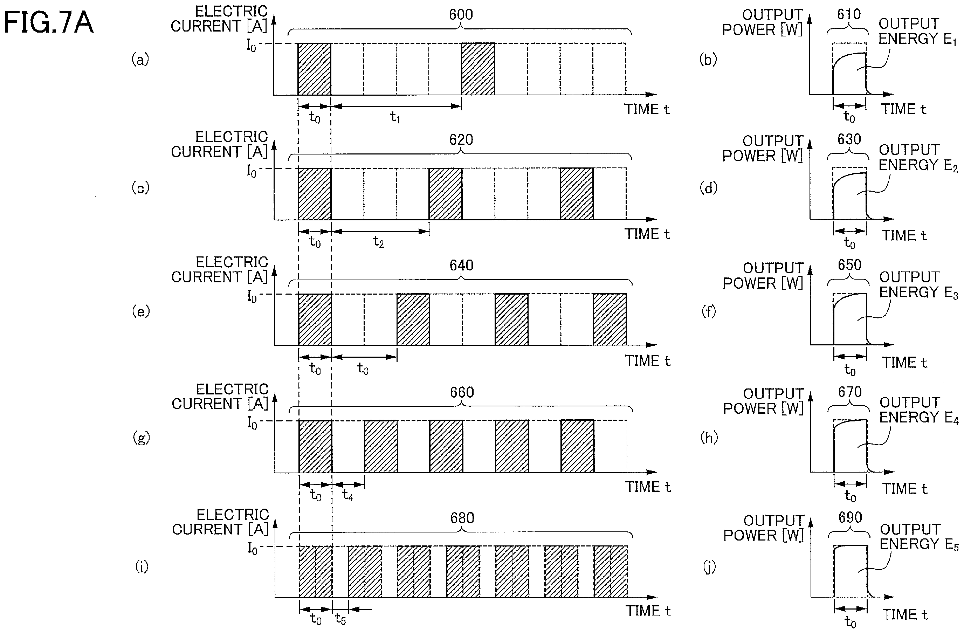

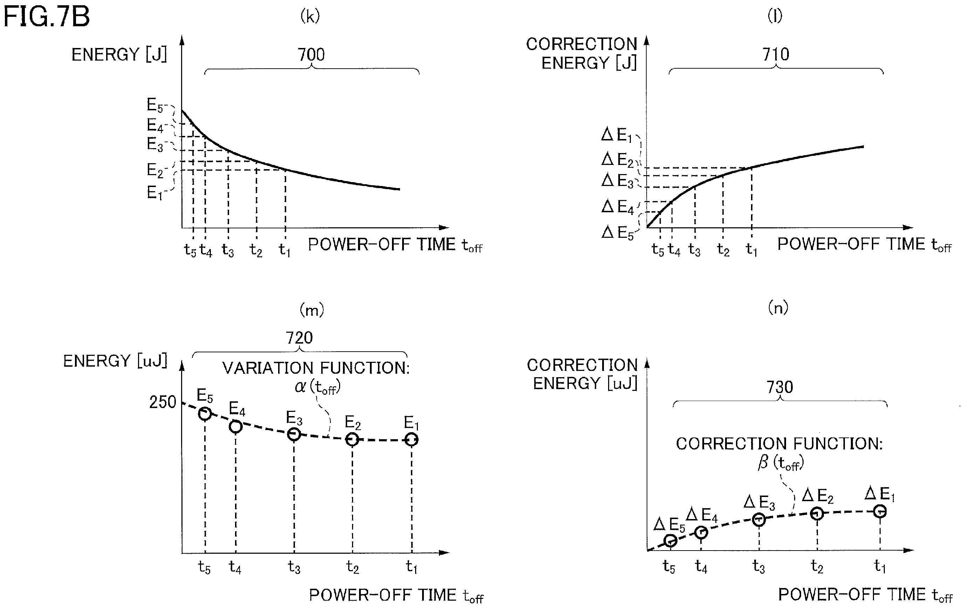

Accordingly, when a plurality of laser emitting elements is used, a correction energy characteristic (graph 570 of (h) of FIG. 6B), which is based on the optical system temperature (graph 540 of (e) of FIG. 6B) and the coupling efficiency characteristic (graph 550 of (f) of FIG. 6B), is required for each of the different light sources. Hereinafter, a method of acquiring such a correction energy characteristic for the different light sources will be described with reference to FIGS. 7A and 7B.

FIGS. 7A and 7B illustrate a method of acquiring the correction energy characteristic 570 for the different light sources.

Note that it is difficult and time-consuming to directly obtain the optical system temperature (graph 540 in (e) of FIG. 6B) and the coupling efficiency characteristic (graph 550 in (f) of FIG. 6B) for each of the plurality of light sources of the laser emitting elements. Hence, a method of easily acquiring the correction energy characteristic (graph 570 in (h) of FIG. 6B) is required. The following describes such a method.

In FIG. 7A, (a), (c), (e), (g), and (i) illustrate respective waveforms 600, 620, 640, 660, and 680, which are current waveforms flowing into different laser emitting elements 41. Each of the respective waveforms 600, 620, 640, 660, and 680 has repeated power-on times and power-off times, where each of the power-on times is a constant to, and each of the power-off times varies from $t_{off} = t_1$ to $t_{off} = t_5$ ($t_1 < t_2 < t_3 < t_4 < t_5$).

In this case, time-dependent changes in the optical power output from the respective laser emitting elements 41 are represented by the output power waveforms 610, 630, 650, 670, and 690 illustrated in (b), (d), (f), (h), and (j) of FIG. 7A.

In FIG. 7B, (k) illustrates a characteristic 700 between the output energies $E_1$ to $E_5$ and the power-off time $t_{off}$, where the output energies $E_1$ to $E_5$ are based on the five types of inputs and outputs of FIG. 7A. As illustrated in (a) to (j) of FIG. 7A, as the power-off time increases, the rise of the output power waveform decreases and the peak decreases. Thus, the energy per one output power waveform decreases with an increase in the power-off time, as illustrated in the graph 700. The energies $E_1$ to $E_5$ in (k) of FIG. 7B correspond to the output energies obtained at the power-off time $t_{off} = t_1$ to $t_{off} = t_5$ ($E_1 < E_2 < E_3 < E_4 < E_5$).

In order to reduce variations in these output energies, the correction energies may be added to $E_1$ to $E_5$ to make the output energies uniform. In FIG. 7B, (1) illustrates a characteristic 710 between the correction energies and the power-off time toff based on the graph 700. The characteristic 710 illustrates the correction energies $\Delta E_1$ to $\Delta E_5$ corresponding to $E_1$ to $E_5$.

By adding the respective correction energies to the output energies, $E_1+\Delta E_1=E_2+\Delta E_2=E_3+\Delta E_3=E_4+\Delta E_4=E_5+\Delta E_5=Ec$ is established. The intercept of the characteristic of the graph 710 need not be zero because any value may be set as a value of Ec.

As an example, consider a case where $t_0$=12.5 μs, $t_i$=50 μs, $t_2$=37.5 μs, $t_3$=25 μs, $t_4$=12.5 μs, $t_5$=6.25 μs, a current I=10A flowing through the laser emitting element 41, output voltage V=4V, and power-to-light conversion efficiency η=50%.

Since the power output from the laser emitting element 41 per unit time is 10A×4V×50%=20W, and the power-on time is $t_0$=12.5 μs, a target energy per one output power waveform is 20W×12.5 μs=250 μJ. The actual energy per one output power waveform varies with the power-off time. For example, when $E_1$=235 μJ, $E_2$=217.5 μJ, $E_3$=207.5 μJ, $E_4$=202.5 μJ, and $E_5$=200 μJ, the actual energy per one output power waveform is represented by the graph 720 in (m) of FIG. 7B. A polynomial approximation of $(t_1,E_1)$ to $(t_5,E_5)$ on the graph 720 yields a variation function $\alpha(t_{off})$ with the power-off time $t_{off}$ as a variable.

A variation function $\alpha(t_{off})$ is a polynomial, such as a linear function, a quadratic function, and a cubic function. When the graph 720 in (m) of FIG. 7B is approximated by a cubic expression, the variation function $\alpha(t_{off})$ may be represented by the following equation (4) (unit is μJ).

$$\alpha(t_{off})=a\times t_{off}^3+b\times t_{off}^2+c\times t_{off}+250 \ ----- \ (4)$$

In this example, since the target energy is 250 μJ, the intercept is determined to be 250 μJ; however, the target energy and the intercept are not limited to these values.

When the variation function $\alpha(t_{off})$ is obtained, a correction function $\beta(t_{off})$ for setting the correction energy can also be calculated in order to reduce an energy variation. The correction function $\beta(t_{off})$ may, for example, be calculated by subtracting the variation function $\alpha(t_{off})$ from the target energy Ec as indicated by the following equation (5).

$$\beta(t_{off})=Ec-\alpha(t_{off}) \ ----- \ (5)$$

The correction function $\beta$ can also be derived by other methods. A simple method readily prepared is to symmetrically move the variation function $\alpha(t_{off})$ with respect to a horizontal axis (power-off time axis), and set the intercept to 0. That is, the correction function when the variation function is the equation (4) is represented by the following equation (6).

$$\beta(t_{off})=-(a\times t_{off}^3+b\times t_{off}^2+c\times t_{off}) \ ----- \ (6)$$

The equations (5) and (6) are used to calculate the correction energies $\Delta E_1$ to $\Delta E_5$ with respect to respective waveforms 600, 620, 640, 660, and 680 illustrated in (a), (c), (e), (g), and (i) of FIG. 7A. The intercept is not necessarily zero. In this case, a correction function $\beta(t_{off})$ obtained is a graph 730 illustrated in (n) of FIG. 7B.

In order to obtain the correction function $\beta(t_{off})$, the energy per one output power waveform is required for a plurality of power-off times with respect to a certain power-on time to. However, it is preferable that the maximum value of the power-off time for acquiring the function should preferably exceed a pixel period used in the actual device. For example, if a light source is driven at a pixel frequency of 40 kHz, a period of one pixel is 25 μs. Thus, as illustrated by the graph 730, the correction function $\beta(t_{off})$ that is approximated in a range up to the power-off time $t_i$=50 μs may be sufficiently applicable.

In the examples of FIG. 7A and FIG. 7B, the number of power-off times for acquiring the correction function is set to be five. However, if prioritizing accuracy, the number of power-off times may be increased, or if the correction function needs to be acquired in a shorter time, the number of power-off times may be decreased.

It is possible to obtain the energy per one output power waveform from an optical waveform after the light output from the laser emitting element 41, following being collimated by a collimator lens, dimmed by an ND filter, or collected by a collecting lens, is incident on a photodetector of a photodiode (PD), and converted into voltage. However, in the case of using a plurality of light sources such as a fiber array, it is costly and time-consuming to adjust the optical system having the plurality of light sources.

If an optical power meter or a thermal sensor having a large area of the photodetector is used, it is possible to obtain optical energy output from a plurality of light sources without performing precise adjustment of the optical system. It is desirable that the optical system should be a system capable of inputting light from all the light sources to be used to the photodetector without adjusting the optical axis. However, the optical power meter and thermal sensor detect the time average (power) of the input optical energy. Thus, in order to measure the energy per one output power waveform, the detected power may be divided by the duty ratio. In this manner, an energy per one output power waveform may be obtained per unit time, and a comparison according to the power-off time may be possible as illustrated in the graph 720.

Thus far, a method of correcting a variation caused by the power-off time in an energy per one output power waveform with respect to one light source has been described. However, in a case of laser emitting elements having a plurality of light sources such as a fiber array, characteristics of the optical system temperature (graph 540) and coupling efficiency (graph 550) when PWM is performed will vary according to the different light sources. Hence, the optimum variation function $\alpha(t_{off})$ and the optimum correction function $\beta(t_{off})$ exist for each of the light sources. Thus, if there are N light sources, the correction functions $\beta 1(t_{off})$ to $\beta N(t_{off})$ can be obtained by the method described above.

As described above, it is possible to reduce variations in the pulse energies generated in a main scanning direction (an arrangement direction of the laser emitting elements) perpendicular to the moving direction of the recording target. As a result, density variation, density unevenness, and accuracy deterioration, or processing defects in three-dimensional objects may be appropriately reduced.

However, it is not necessarily required to obtain the correction functions $\beta(t_{off})$ corresponding to all the light sources, and the correction functions $\beta(t_{off})$ may be obtained corresponding to a number of light sources less than the total number of light sources.

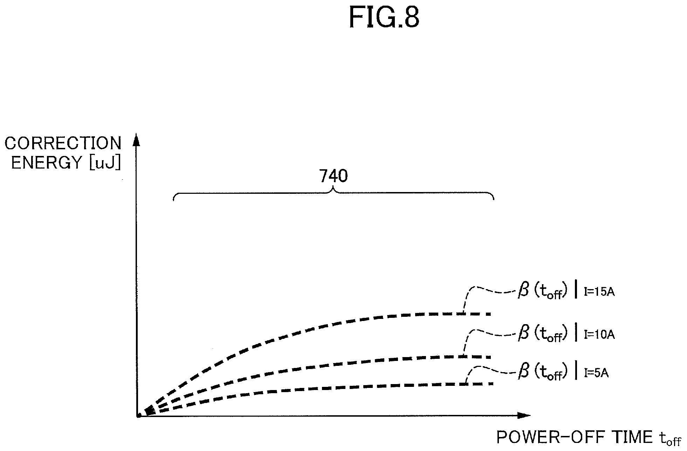

Note that, in this example, a current value of a current flowing through the laser emitting element 41 is set to 10A, but the correction function $\beta(t_{off})$ may be changed in accordance with this set value. FIG. 8 is a diagram illustrating examples of the characteristics of the correction function when the current value is variable. The vertical and horizontal axes of FIG. 8 are similar to those of (n) in FIG. 7B.

The output device used in the present embodiment is basically assumed to perform pulse width modulation (PWM) with a fixed current value. If the current value is also modulated, it is necessary to acquire a plurality of correction functions $\beta(t_{off})$ corresponding to respective current values, as illustrated in a graph 740 of FIG. 8.

Here, the equation (6) may be multiplied by the polynomial $\gamma(I)$ with a current value as a variable, which is represented by the following equation (7) to be used as a correction function.

$$\beta(t_{off})=-(a \times t_{off}^3 + b \times t_{off}^2 + c \times t_{off}) \times \gamma(I) \text{ ----- (7)}$$

Furthermore, the equation (7) may be multiplied by the polynomial A(to) with a power-on time to as a variable, which is represented by the following equation (8) to be used as a correction function.

$$\beta(t_{off})=-(a \times t_{off}^3 + b \times t_{off}^2 + c \times t_{off}) \times \gamma(I) \times A(t_0) \text{ ----- (8)}$$

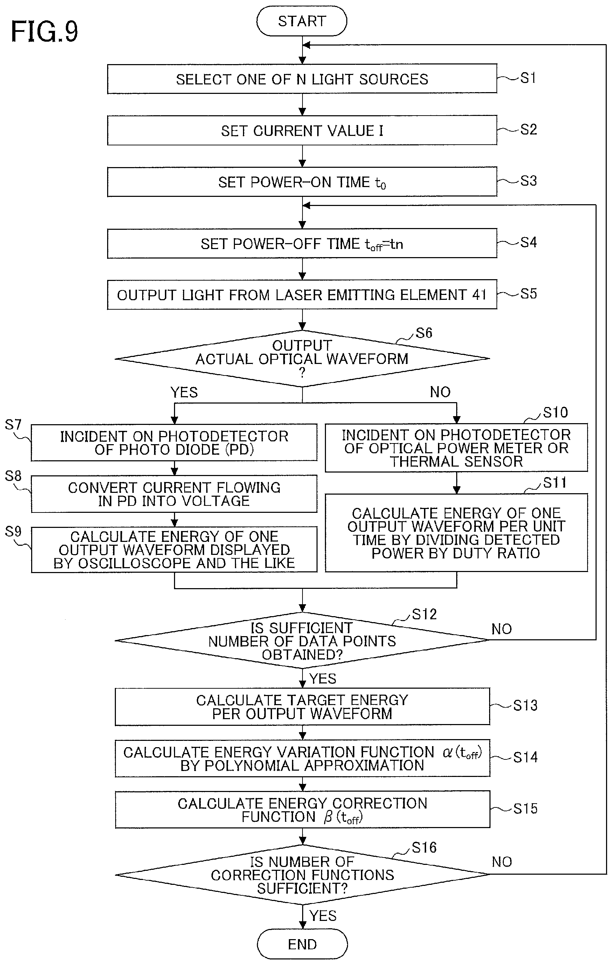

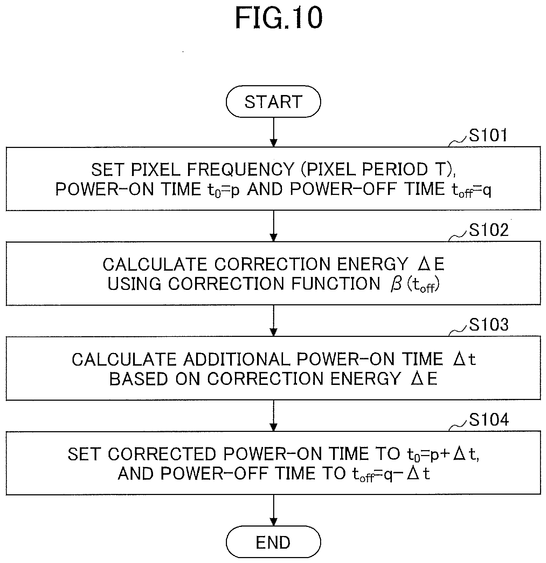

Next, an output control method according to the present embodiment will be described with reference to FIGS. 9 and 10. FIG. 9 is a flowchart illustrating a process of calculating a correction function $\beta(t_{off})$. Each step in the process of the flowchart of FIG. 9 is performed in advance, for example, at every predetermined number of times, prior to performing a laser output operation by the controller 46.

The process of the flowchart is executed on the assumption that, at a phase prior to the image recording device of FIG. 1 recording an image onto a recording target, a system for receiving laser light emitted from the laser emitting elements 41 of FIG. 4 is already disposed, and a correction function $\beta(t_{off})$ is calculated as correction information of the correction information database 470 stored in the controller 46 of FIG. 5. The controller 46 selects a desired one of light sources from the laser emitting elements 41 (Step S1), sets a current value I (Step S2), a power-on time to (Step S3), and a power-off time (Step S4), of an electric current flowing into the selected light source, and then outputs light from the selected light source of the laser emitting element 41 (Step S5).

The method of detecting light differs according to whether the actual optical waveform is output (YES in Step S6) or the average power is detected (NO in Step S6).

When the actual optical waveform is output for detecting light (YES in Step S6), light is incident on a photodetector of a photodiode (PD) (Step S7), a current flowing through the PD is then converted into a voltage (Step S8), and an energy of one output power waveform is calculated based on a time-dependent change in the output power waveform displayed on a display by an oscilloscope and the like (Step S9).

When the average power is detected for detecting light (NO in Step S6), that is, light is incident on a photodetector of an optical power meter or of a thermal sensor (Step S10), an energy of one output power waveform per unit time is calculated by dividing the detected power by the duty ratio (Step S11).

With the results obtained by the steps thus far, the energy of one output power waveform with respect to one power-off time toff is obtained. However, if a sufficient number of data points is not obtained yet (NO in step S12), the process returns to step S4 to repeat the energy acquisition process.

However, if the sufficient number of data points is obtained (YES in Step S12), a target energy Ec per one output power waveform is calculated (Step S13), and an energy variation function $\alpha(t_{off})$ is calculated by polynomial approximation (Step S14).

In Step S15, an energy correction function $\beta(t_{off})$ is calculated based on the energy variation function $\alpha(t_{off})$. For example, the equation (5) can be used to calculate the energy correction function $\beta(t_{off})$ by subtracting the energy variation function $\alpha(t_{off})$ from the target energy Ec.

When the number of the calculated correction functions $\beta(t_{off})$ is insufficient (NO in step S16), the process returns to Step 1 to select another one of light sources from the laser emitting elements 41. Meanwhile, when the number of the calculated correction functions $\beta(t_{off})$ is sufficient (YES in Step S16), this indicates that the number of the correction functions $\beta$ required for being stored in the correction information database 470 of the controller 46 is obtained. The process of the control flowchart thus ends.

FIG. 10 is a flowchart illustrating an operation of the driver 45 of the electric circuit illustrated in FIG. 5. Each step of a process in the flowchart of FIG. 10 is performed by the controller 46.

The process of the flowchart is executed on the assumption that the required number of correction functions $\beta(t_{off})$ is already obtained by the flowchart illustrated in FIG. 9, at a phase before the image recording device of FIG. 1 records an image onto a recording target.

During current driving, the controller 46 transmits to the light emitting controller 455 a PWM control signal 455S as a switching signal (light emitting information) for switching the light emitting controller 455 on and off. However, the controller 46 corrects the control signal according to the flowchart illustrated in FIG. 10, using the correction function $\beta$ before transmitting the PWM control signal 455S.

First, the PWM control signal 455S is set. The PWM control signal 455S includes information such as pixel frequency (pixel period T), power-on time to=p, and power-off time $t_{off}$=q (Step S101). In this case, T = p + q.

Next, a correction energy $\Delta E$ is calculated by using the correction function $\beta(t_{off})$ (Step S102). For example, the controller 46 inputs a power-off time $t_{off}$=q into the equation (5) or the equation (6) to calculate a correction energy $\Delta E$ as an output value of the correction function $\beta$.

Next, an additional power-on time $\Delta t$ is calculated based on the calculated correction energy $\Delta E$, the voltage V at two ends of the output units 454, and the current value I (Step S103). For example, the controller 46 can calculate the additional power-on time $\Delta t$ by dividing the correction energy $\Delta E$ by the power VI of the output unit ($\Delta t = \Delta E/VI$).

Then, the power-on time and the power-off time are corrected using the calculated additional power-on time $\Delta t$ (Step S104). Specifically, it is assumed that the pixel period T is unchanged, the corrected power-on time is $t_0$=p+$\Delta t$, and the power-off time is $t_{off}$=q-$\Delta t$. The controller 46 transmits the PWM control signal 455S, which has been corrected based on the corrected power-on time and power-off time, to the light emitting controller 455. When the process of step S104 is completed, the process of the control flowchart ends.

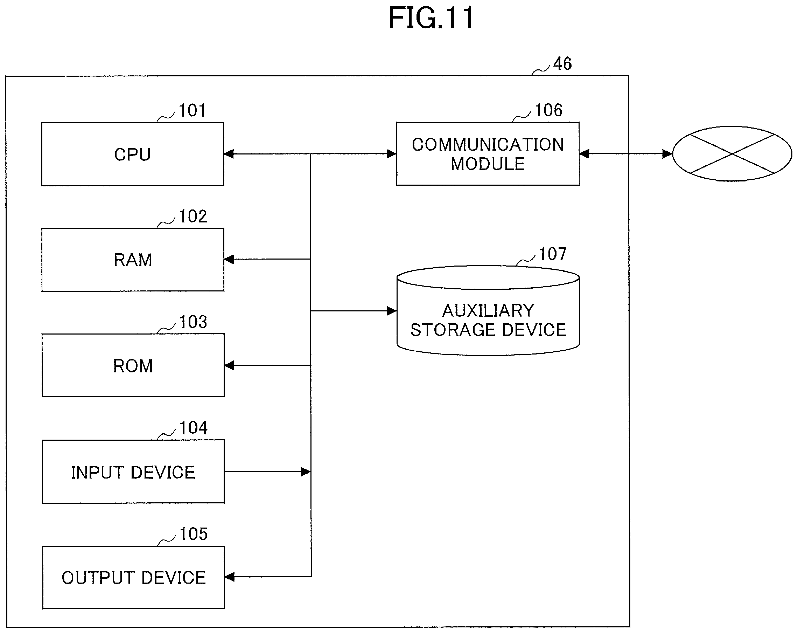

FIG. 11 is a hardware configuration diagram illustrating a controller 46. As illustrated in FIG. 11, the controller 46 may be configured as a computer system physically including a CPU (CPU) 101, a RAM (Random Access Memory) 102 as a main storage device, a ROM (Read Only Memory) 103, an input device 104 such as a keyboard and a mouse, an output device 105 such as a display and a touch panel, a communication module 106 as a data transmitting-receiving device such as a network card, and an auxiliary storage device 107 such as a hard disk.

The above-described functions of the controller 46 are implemented by reading predetermined computer software (output control program) on hardware such as the CPU 101 and the RAM 102, and operating the communication module 106, the input device 104, and the output device 105 under the control of the CPU 101, while reading and writing data in the RAM 102 and the auxiliary storage device 107.

The output control program according to the present embodiment is stored, for example, in a storage device provided in a computer. The output control program may be configured such that a part or all of the output control program is transmitted through a transmission medium such as a communication line, and is received and recorded (including installation) by a communication module or the like provided in a computer. The manufacturing execution program may be configured to be recorded (including installation) in a computer from a state where a part or all of the manufacturing execution program is stored in a portable storage medium such as a CD-ROM, a DVD-ROM, or a flash memory.

As described above, in the output control device 140 according to the present embodiment, when a power-on time to and a power-off time $t_{off}$ of an electric current flowing through a laser emitting element 41 are determined according to a desired output of the laser emitting element 41, the controller 46 calculates a power-on time correction value $\Delta t$ using a correction function $\beta(t_{off})$ individually set for the laser emitting elements 41 on a per laser emitting element basis, and corrects a power-on time and a power-off time based on the calculated power-on time correction value $\Delta t$.

According to this configuration, when the output control device 140 records an image on a recording target by applying light emitted from a plurality of laser emitting elements 41 disposed in an array, and there are individual differences in modulation characteristics according to the laser emitting elements 41, the output control device 140 enables controlling output variations between the laser emitting elements 41 by correcting a length of the power-on time to based on a length of the power-off time of a power supply to each of the laser emitting elements 41. Thus, it is possible to reduce variations in pulse energies generated in a main scanning direction (an arrangement direction of the laser emitting elements 41) perpendicular to a movement direction of the recording target (e.g., thermosensitive recording label RL illustrated in FIG. 1). As a result, it is possible to reduce density variation and density unevenness in the recorded image, and accuracy deterioration and a processing defect of a solid.

According to the present embodiment, the correction function $\beta(t_{off})$ can be formulated as, for example, the equations (5) to (8) described above. In other words, the correction function $\beta(t_{off})$ is a function of the power-off time toff in each of the plurality of laser emitting elements 41. More specifically, the correction function $\beta(t_{off})$ may be expressed as a function configured to compensate for energy varying with the power-off time toff where the energy is output from the laser emitting element 41 at a given power-on time to. Still more specifically, the correction function $\beta(t_{off})$ may be expressed as a function that includes a polynomial function or an exponential function of the power-off time toff in each of the plurality of laser emitting elements 41. Furthermore, the correction function $\beta(t_{off})$ may be expressed as a monotonically increasing function having the power-off time toff as a variable. In addition, the correction function $\beta(t_{off})$ may be expressed as a function configured to compensate for an optical system temperature change or a coupling efficiency change of a light source of each of the plurality of laser emitting elements 41 with respect to the power-off time toff.

By using such a correction function $\beta(t_{off})$, the individual modulation characteristics of the plurality of laser emitting elements 41 can be expressed in a highly accurate manner according to the respective modulation characteristics. This can sufficiently reduce the differences in the modulation characteristics between the respective elements to make the outputs of the respective elements more uniform.

As described above, the present embodiment has been described with reference to the specific examples. However, the present disclosure is not limited to these specific examples. Those specific examples, to which design modifications have been appropriately made by those skilled in the art, are also encompassed by the present disclosure as long as the specific examples possess the features of the present disclosure. The elements provided in each of the specific examples described above, and the arrangement, conditions, shape, and the like thereof, may be appropriately adapted and modified without being limited to those examples. Each of elements provided by the above-described specific examples may be combined or recombined as appropriate, unless there is a technical inconsistency The invention is defined by the independent claims. The dependent claims define advantageous embodiments

DESCRIPTION OF SYMBOLS

| | |
|---|---|
| 100 | image recording system (image recording device) |
| 140 | output control device (laser output device) |
| 41 | laser emitting element (output element) |
| 454 | output unit |
| 455 | light emitting controller (switch) |
| 455S | PWM control signal (switching signal) |
| 46 | controller |
| $\beta(t_{off})$ | correction function |
| to | power-on time |
| toff | power-off time |
| $\Delta t$ | power-on time correction value |

**Claims**

1. A laser output device (140) comprising:

   at least one laser emitting element (41); and
   a controller (46) configured to control an output of the at least one laser emitting element (41) by switching on and off of a power supply (48) to supply an electric current to the at least one laser emitting element (41), wherein upon a power-on time and a power-off time of the power supply (48) to supply an electric current to the at least one laser emitting element (41) being determined according to a desired output of the at least one laser emitting element (41),
   **characterized in that**
   the controller (46) is configured to calculate a power-on time correction value using a correction function individually set for the at least one laser emitting element (41) on a per laser emitting element basis, and corrects the power-on time and the power-off time, based on the calculated power-on time correction value,
   wherein the correction function is a function configured to compensate for an optical system temperature change or a coupling efficiency change of a light source of the laser emitting element (41) with respect to the power-off time.

2. The laser output device (140) according to claim 1, further comprising:

an output unit (454) connected to an output side of a current drive circuit; and
a switching unit (455) connected to the output unit (454), wherein
the at least one laser emitting element (41) is connected to the output unit (454),
the controller (46) outputs to the switching unit (455) a switching signal for switching on and off of the switching unit (455) to control the power supply (48) to the at least one laser emitting element (41), and
the switching signal is generated based on the corrected power-on time and power-off time.

3. The laser output device (140) according to claim 1 or 2, wherein
the correction function is a function of the power-off time in each of the at least one laser emitting element (41).

4. The laser output device (140) according to claim 3, wherein
the correction function is a function configured to compensate for energy varying with the power-off time, the energy being output from the at least one laser emitting element (41) at a given power-on time.

5. The laser control device (140) according to claim 4, wherein
the correction function includes a polynomial function or an exponential function of the power-off time in each of the at least one laser emitting element (41).

6. The laser output device (140) according to claim 5, wherein
the correction function is a monotonically increasing function having the power-off time as a variable.

7. An image recording device (100) comprising:

the laser output device (140) according to any one of claims 1 to 6, wherein
the laser output device (140) records an image on the recording target by applying an energy to the recording target using laser light emitted from the at least one laser emitting element (41).

8. An output control method performed by a laser output device (140), the laser output device (140) including at least one laser emitting element (41) and a controller (46) configured to control an output of the at least one laser emitting element (41) by switching on and off of a power supply (48) to supply an electric current to the at least one laser emitting element (41), the output control method comprising:

determining a power-on time and a power-off time of the power supply (48) to supply an electric current to the at least one laser emitting element (41) according to a desired output of the at least one laser emitting element (41);
**characterized by**:

calculating a power-on time correction value using a correction function individually set for the at least one laser emitting element (41) on a per laser emitting element basis; and
correcting the power-on time and the power-off time, based on the calculated power-on time correction value, the correction function is a function configured to compensate for an optical system temperature change or a coupling efficiency change of a light source of the laser emitting element (41) with respect to the power-off time.

9. A computer-implemented output control program of a laser output device (140), the laser output device (140) including at least one laser emitting element (41) and a controller (46) configured to control an output of the at least one laser emitting element (41) by switching on and off of a power supply (48) to supply an electric current to the at least one laser emitting element (41), wherein when the output control program is executed by one or more processors, the one or more processors causes a computer to perform a process comprising:

determining a power-on time and a power-off time of the power supply (48) to supply an electric current to the at least one laser emitting element (41) according to a desired output of the at least one laser emitting element (41);

**characterized by**:

calculating a power-on time correction value using a correction function individually set for the at least one laser emitting element (41) on a per laser emitting element basis; and
correcting the power-on time and the power-off time, based on the calculated power-on time correction value;
the correction function is a function configured to compensate for an optical system temperature change or a coupling efficiency change of a light source of the laser emitting element (41) with respect to the power-off time.

**Patentansprüche**

1. Laserausgabevorrichtung (140), umfassend:

mindestens ein laseremittierendes Element (41); und
eine Steuerung (46), die konfiguriert ist, dass sie eine Ausgabe des mindestens einen laseremittierenden Elements (41) durch Ein- und Ausschalten einer Stromversorgung (48) steuert, um dem mindestens einen laseremittierenden Element (41) einen elektrischen Strom zuzuführen, wobei
wobei eine Einschaltzeit und eine Ausschaltzeit der Stromversorgung (48) zum Zuführen eines elektrischen Stroms zu dem mindestens einen laseremittierenden Element (41) entsprechend einer gewünschten Leistung des mindestens einen laseremittierenden Elements (41) bestimmt wird,
**dadurch gekennzeichnet, dass**
die Steuerung (46) so konfiguriert ist, dass sie einen Einschaltzeitkorrekturwert unter Verwendung einer Korrekturfunktion berechnet, die individuell für das mindestens eine Laseremissionselement (41) auf einer Basis pro Laseremissionselement eingestellt ist, und die Einschaltzeit und die Ausschaltzeit auf der Grundlage des berechneten Einschaltzeitkorrekturwertes korrigiert,
wobei die Korrekturfunktion eine Funktion ist, die so konfiguriert ist, dass sie eine Temperaturänderung des optischen Systems oder eine Änderung der Kopplungseffizienz einer Lichtquelle des Laseremissionselements (41) in Bezug auf die Abschaltzeit kompensiert.

2. Laserausgabevorrichtung (140) nach Anspruch 1, ferner umfassend:

eine Ausgangseinheit (454), die mit einer Ausgangsseite einer Stromtreiberschaltung verbunden ist; und
eine Schalteinheit (455), die mit der Ausgabeeinheit (454) verbunden ist, wobei das mindestens eine laseremittierende Element (41) mit der Ausgabeeinheit (454) verbunden ist,
die Steuerung (46) an die Schalteinheit (455) ein Schaltsignal zum Ein- und Ausschalten der Schalteinheit (455) ausgibt, um die Stromversorgung (48) des mindestens einen laseremittierenden Elements (41) zu steuern, und
das Schaltsignal wird auf der Grundlage der korrigierten Einschaltzeit und Ausschaltzeit erzeugt.

3. Laserausgabevorrichtung (140) nach Anspruch 1 oder 2, bei der
die Korrekturfunktion ist eine Funktion der Ausschaltzeit in jedem der mindestens einen laseremittierenden Elemente (41).

4. Laserausgabevorrichtung (140) nach Anspruch 3, bei der
die Korrekturfunktion eine Funktion ist, die so konfiguriert ist, dass sie die mit der Ausschaltzeit variierende Energie kompensiert, wobei die Energie von dem mindestens einen laseremittierenden Element (41) zu einer gegebenen Einschaltzeit ausgegeben wird.

5. Laserausgabevorrichtung (140) nach Anspruch 4, bei der
die Korrekturfunktion eine Polynomfunktion oder eine Exponentialfunktion der Ausschaltzeit in jedem der mindestens einen laseremittierenden Elemente (41) umfasst.

6. Laserausgabevorrichtung (140) nach Anspruch 5, bei der
die Korrekturfunktion ist eine monoton ansteigende Funktion mit der Ausschaltzeit als Variable.

7. Bildaufzeichnungsvorrichtung (100), umfassend:

die Laserausgabevorrichtung (140) nach einem der Ansprüche 1 bis 6, wobei

die Laserausgabevorrichtung (140) ein Bild auf dem Aufzeichnungsziel aufzeichnet, indem sie eine Energie auf das Aufzeichnungsziel unter Verwendung von Laserlicht aufbringt, das von dem mindestens einen Laseremissionselement (41) emittiert wird.

8. Verfahren zur Ausgabesteuerung, das von einer Laserausgabevorrichtung (140) durchgeführt wird, wobei die Laserausgabevorrichtung (140) mindestens ein laseremittierendes Element (41) und eine Steuerung (46) enthält, die so konfiguriert ist, dass sie eine Ausgabe des mindestens einen laseremittierenden Elements (41) durch Ein- und Ausschalten einer Stromversorgung (48) steuert, um dem mindestens einen laseremittierenden Element (41) einen elektrischen Strom zuzuführen, wobei das Verfahren zur Ausgabesteuerung Folgendes umfasst:

Bestimmen einer Einschaltzeit und einer Ausschaltzeit der Stromversorgung (48), um einen elektrischen Strom an das mindestens eine laseremittierende Element (41) entsprechend einer gewünschten Leistung des mindestens einen laseremittierenden Elements (41) zu liefern;
**gekennzeichnet durch**:

Berechnen eines Einschaltzeitkorrekturwertes unter Verwendung einer Korrekturfunktion, die individuell für das mindestens eine laseremittierende Element (41) auf einer Basis pro laseremittierendem Element eingestellt ist; und
Korrektur der Einschaltzeit und der Ausschaltzeit auf der Grundlage des berechneten Korrekturwerts für die Einschaltzeit,
die Korrekturfunktion eine Funktion ist, die so konfiguriert ist, dass sie eine Temperaturänderung des optischen Systems oder eine Änderung des Kopplungswirkungsgrads einer Lichtquelle des Laseremissionselements (41) in Bezug auf die Ausschaltzeit kompensiert.

9. Computerimplementiertes Ausgabesteuerungsprogramm einer Laserausgabevorrichtung (140), wobei die Laserausgabevorrichtung (140) mindestens ein laseremittierendes Element (41) und eine Steuerung (46) enthält, die so konfiguriert ist, dass sie eine Ausgabe des mindestens einen laseremittierenden Elements (41) durch Ein- und Ausschalten einer Stromversorgung (48) steuert, um dem mindestens einen laseremittierenden Element (41) einen elektrischen Strom zuzuführen, wobei, wenn das Ausgabesteuerungsprogramm von einem oder mehreren Prozessoren ausgeführt wird, der eine oder die mehreren Prozessoren einen Computer veranlassen, einen Prozess durchzuführen, der Folgendes umfasst:

Bestimmen einer Einschaltzeit und einer Ausschaltzeit der Stromversorgung (48), um einen elektrischen Strom an das mindestens eine laseremittierende Element (41) entsprechend einer gewünschten Leistung des mindestens einen laseremittierenden Elements (41) zu liefern;
**gekennzeichnet durch**:

Berechnen eines Einschaltzeitkorrekturwertes unter Verwendung einer Korrekturfunktion, die individuell für das mindestens eine laseremittierende Element (41) auf einer Basis pro laseremittierendem Element eingestellt ist; und
Korrektur der Einschaltzeit und der Ausschaltzeit auf der Grundlage des berechneten Korrekturwerts für die Einschaltzeit;
die Korrekturfunktion eine Funktion ist, die so konfiguriert ist, dass sie eine Temperaturänderung des optischen Systems oder eine Änderung des Kopplungswirkungsgrads einer Lichtquelle des Laseremissionselements (41) in Bezug auf die Ausschaltzeit kompensiert.

**Revendications**

1. Dispositif de sortie laser (140) comprenant :

au moins un élément d'émission laser (41) ; et
un contrôleur (46) configuré pour contrôler une sortie de l'au moins un élément d'émission laser (41) en allumant et en éteignant une alimentation électrique (48) pour fournir un courant électrique à l'au moins un élément d'émission laser (41), dans lequel
lors d'un temps de mise sous tension et d'un temps de mise hors tension de l'alimentation électrique (48) pour fournir un courant électrique à l'au moins un élément d'émission laser (41) étant déterminé selon une sortie souhaitée de l'au moins un élément d'émission laser (41),

**caractérisé en ce que**
le contrôleur (46) est configuré pour calculer une valeur de correction de temps de mise sous tension en utilisant une fonction de correction réglée individuellement pour l'au moins un élément d'émission laser (41) sur une base par élément d'émission laser, et corrige le temps de mise sous tension et le temps de mise hors tension, sur la base de la valeur de correction du temps de mise sous tension calculée,
la fonction de correction étant une fonction configurée pour compenser un changement de température du système optique ou un changement d'efficacité de couplage d'une source de lumière de l'élément d'émission laser (41) par rapport au temps de mise hors tension.

2. Dispositif de sortie laser (140) selon la revendication 1, comprenant en outre :

une unité de sortie (454) connectée à un côté sortie d'un circuit d'attaque de courant ; et
une unité de commutation (455) connectée à l'unité de sortie (454), dans lequel l'au moins un élément d'émission laser (41) est connecté à l'unité de sortie (454),
le contrôleur (46) émet vers l'unité de commutation (455) un signal de commutation pour allumer et éteindre l'unité de commutation (455) pour contrôler l'alimentation (48) de l'au moins un élément d'émission laser (41), et
le signal de commutation est généré sur la base du temps de mise sous tension et du temps de mise hors tension corrigés.

3. Dispositif de sortie laser (140) selon la revendication 1 ou 2, dans lequel la fonction de correction est une fonction du temps de mise hors tension dans chacun de l'au moins un élément d'émission laser (41).

4. Dispositif de sortie laser (140) selon la revendication 3, dans lequel la fonction de correction est une fonction configurée pour compenser l'énergie variant avec le temps de mise hors tension, l'énergie étant sortie par l'au moins un élément d'émission laser (41) à un temps de mise sous tension donné.

5. Dispositif de contrôle laser (140) selon la revendication 4, dans lequel la fonction de correction comprend une fonction polynomiale ou une fonction exponentielle du temps de mise hors tension dans chacun de l'au moins un élément d'émission laser (41).

6. Dispositif de sortie laser (140) selon la revendication 5, dans lequel la fonction de correction est une fonction croissante de façon monotone ayant le temps de mise hors tension en tant que variable.

7. Dispositif d'enregistrement d'image (100) comprenant :
le dispositif de sortie laser (140) selon l'une quelconque des revendications 1 à 6, dans lequel le dispositif de sortie laser (140) enregistre une image sur la cible d'enregistrement en appliquant une énergie à la cible d'enregistrement en utilisant la lumière laser émise par l'au moins un élément d'émission laser (41).

8. Procédé de contrôle de sortie exécuté par un dispositif de sortie laser (140), le dispositif de sortie laser (140) comprenant au moins un élément d'émission laser (41) et un contrôleur (46) configuré pour contrôler une sortie dudit au moins un élément d'émission laser (41) en allumant et en éteignant une alimentation électrique (48) pour fournir un courant électrique audit au moins un élément d'émission laser (41), le procédé de contrôle de sortie comprenant :

la détermination d'un temps de mise sous tension et d'un temps de mise hors tension de l'alimentation électrique (48) pour fournir un courant électrique à l'au moins un élément d'émission laser (41) selon une sortie souhaitée de l'au moins un élément d'émission laser (41) ;
**caractérisé par** :

le calcul d'une valeur de correction de temps de mise sous tension en utilisant une fonction de correction réglée individuellement pour l'au moins un élément d'émission laser (41) sur une base par élément d'émission laser ; et
la correction du temps de mise sous tension et du temps de mise hors tension, sur la base de la valeur de correction du temps de mise sous tension calculée,
la fonction de correction est une fonction configurée pour compenser un changement de température du système optique ou un changement d'efficacité de couplage d'une source de lumière de l'élément d'émission laser (41) par rapport au temps de mise hors tension.

9. Programme de contrôle de sortie mis en œuvre par ordinateur d'un dispositif de sortie laser (140), le dispositif de sortie laser (140) comprenant au moins un élément d'émission laser (41) et un contrôleur (46) configuré pour contrôler une sortie dudit au moins un élément d'émission laser (41) en allumant et en éteignant une alimentation (48) pour fournir un courant électrique audit au moins un élément d'émission laser (41), dans lequel lorsque le programme de contrôle de sortie est exécuté par un ou plusieurs processeurs, l'un ou plusieurs processeurs amènent un ordinateur à exécuter un processus comprenant :

la détermination d'un temps de mise sous tension et d'un temps de mise hors tension de l'alimentation (48) pour fournir un courant électrique à l'au moins un élément d'émission laser (41) selon un sortie souhaitée de l'au moins un élément d'émission laser (41) ;
**caractérisé par** :

le calcul d'une valeur de correction de temps de mise sous tension en utilisant une fonction de correction réglée individuellement pour l'au moins un élément d'émission laser (41) sur une base par élément d'émission laser ; et
la correction du temps de mise sous tension et du temps de mise hors tension, sur la base de la valeur de correction de temps de mise sous tension calculée ;
la fonction de correction est une fonction configurée pour compenser un changement de température du système optique ou un changement d'efficacité de couplage d'une source de lumière de l'élément d'émission laser (41) par rapport au temps de mise hors tension.

# FIG.1

FIG.2

# FIG.3

READING DEVICE ~15

CONTROL PANEL ~181

IMAGE INFORMATION OUTPUT UNIT ~47

SYSTEM CONTROL DEVICE ~18

CONVEYOR DEVICE ~10

RECORDING DEVICE ~14

# FIG.4

# FIG.5

# FIG.6A

(a)

ELECTRIC CURRENT [A]

500

$I_1$

$t_0$ $t_1$ $t_1$

TIME t

(b)

OUTPUT POWER [W]

510

OUTPUT ENERGY $E_1$

TIME t

(c)

ELECTRIC CURRENT [A]

520

$I_1$

$t_0$ $t_2$

TIME t

(d)

OUTPUT POWER [W]

530

OUTPUT ENERGY $E_2$

TIME t

EP 3 772 216 B1

FIG.6B

# FIG.6C

(i)

ELECTRIC
CURRENT [A]

501

$I_1$

$\Delta t_1$    $t_1 - \Delta t_1$

TIME t

(j)

OUTPUT
POWER [W]

511

OUTPUT
ENERGY $E_1 + \Delta E_1$

TIME t

(k)

ELECTRIC
CURRENT [A]

521

$I_1$

$\Delta t_2$    $t_2 - \Delta t_2$

TIME t

(l)

OUTPUT
POWER [W]

531

OUTPUT
ENERGY $E_2 + \Delta E_2$

TIME t

EP 3 772 216 B1

FIG.7A

# FIG.7B

(k)

700

ENERGY [J]

$E_5$, $E_4$, $E_3$, $E_2$, $E_1$

$t_5$ $t_4$ $t_3$ $t_2$ $t_1$

POWER-OFF TIME $t_{off}$

(l)

710

CORRECTION ENERGY [J]

$\Delta E_1$, $\Delta E_2$, $\Delta E_3$, $\Delta E_4$, $\Delta E_5$

$t_5$ $t_4$ $t_3$ $t_2$ $t_1$

POWER-OFF TIME $t_{off}$

(m)

720

VARIATION FUNCTION: $\alpha(t_{off})$

ENERGY [uJ]

250

$E_5$ $E_4$ $E_3$ $E_2$ $E_1$

$t_5$ $t_4$ $t_3$ $t_2$ $t_1$

POWER-OFF TIME $t_{off}$

(n)

730

CORRECTION FUNCTION: $\beta(t_{off})$

CORRECTION ENERGY [uJ]

$\Delta E_5$ $\Delta E_4$ $\Delta E_3$ $\Delta E_2$ $\Delta E_1$

$t_5$ $t_4$ $t_3$ $t_2$ $t_1$

POWER-OFF TIME $t_{off}$

# FIG.8

CORRECTION
ENERGY [uJ]

740

$\beta (t_{off}) \mid$ I=15A

$\beta (t_{off}) \mid$ I=10A

$\beta (t_{off}) \mid$ I=5A

POWER-OFF TIME $t_{off}$

# FIG.9

START

SELECT ONE OF N LIGHT SOURCES — S1

SET CURRENT VALUE I — S2

SET POWER-ON TIME $t_0$ — S3

SET POWER-OFF TIME $t_{off}$=tn — S4

OUTPUT LIGHT FROM LASER EMITTING ELEMENT 41 — S5

OUTPUT ACTUAL OPTICAL WAVEFORM ? — S6

YES

NO

S7 — INCIDENT ON PHOTODETECTOR OF PHOTO DIODE (PD)

S10 — INCIDENT ON PHOTODETECTOR OF OPTICAL POWER METER OR THERMAL SENSOR

S8 — CONVERT CURRENT FLOWING IN PD INTO VOLTAGE

S9 — CALCULATE ENERGY OF ONE OUTPUT WAVEFORM DISPLAYED BY OSCILLOSCOPE AND THE LIKE

S11 — CALCULATE ENERGY OF ONE OUTPUT WAVEFORM PER UNIT TIME BY DIVIDING DETECTED POWER BY DUTY RATIO

IS SUFFICIENT NUMBER OF DATA POINTS OBTAINED? — S12

NO

YES

CALCULATE TARGET ENERGY PER OUTPUT WAVEFORM — S13

CALCULATE ENERGY VARIATION FUNCTION $\alpha(t_{off})$ BY POLYNOMIAL APPROXIMATION — S14

CALCULATE ENERGY CORRECTION FUNCTION $\beta(t_{off})$ — S15

IS NUMBER OF CORRECTION FUNCTIONS SUFFICIENT? — S16

NO

YES

END

# FIG.10

```
            ┌─────────────┐
            │    START    │
            └──────┬──────┘
                   │                         ~S101
   ┌───────────────▼────────────────────────────┐
   │     SET PIXEL FREQUENCY (PIXEL PERIOD T),   │
   │  POWER-ON TIME t₀=p AND POWER-OFF TIME t_off=q │
   └───────────────┬────────────────────────────┘
                   │                         ~S102
   ┌───────────────▼────────────────────────────┐
   │     CALCULATE CORRECTION ENERGY ΔE          │
   │  USING CORRECTION FUNCTION β (t_off)        │
   └───────────────┬────────────────────────────┘
                   │                         ~S103
   ┌───────────────▼────────────────────────────┐
   │  CALCULATE ADDITIONAL POWER-ON TIME Δt      │
   │     BASED ON CORRECTION ENERGY ΔE           │
   └───────────────┬────────────────────────────┘
                   │                         ~S104
   ┌───────────────▼────────────────────────────┐
   │  SET CORRECTED POWER-ON TIME TO t₀=p+Δt,    │
   │    AND POWER-OFF TIME TO t_off=q-Δt         │
   └───────────────┬────────────────────────────┘
                   │
            ┌──────▼──────┐
            │     END     │
            └─────────────┘
```

- SET PIXEL FREQUENCY (PIXEL PERIOD T), POWER-ON TIME $t_0=p$ AND POWER-OFF TIME $t_{off}=q$ — S101
- CALCULATE CORRECTION ENERGY $\Delta E$ USING CORRECTION FUNCTION $\beta(t_{off})$ — S102
- CALCULATE ADDITIONAL POWER-ON TIME $\Delta t$ BASED ON CORRECTION ENERGY $\Delta E$ — S103
- SET CORRECTED POWER-ON TIME TO $t_0=p+\Delta t$, AND POWER-OFF TIME TO $t_{off}=q-\Delta t$ — S104

## FIG.11

EP 3 772 216 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6077263 B
- EP 3210791 A1
- US 2015229095 A1
- US 2010260216 A1
- WO 03084013 A1